# EUROPÄISCHE PATENTANMELDUNG

(11) **EP 3 527 431 A1**
(43) Veröffentlichungstag der Anmeldung: **21.08.2019**
(21) Anmeldenummer: 18157415.3
(22) Anmeldetag: 19.02.2018
(51) Int. Cl.: B60R 13/02, B60R 16/04

(54) **DICHTUNGSANORDNUNG ZUR VORFIXIERUNG UND VORAUSRICHTUNG EINER SÄULENBLENDE AN EINER TÜRSTRUKTUR EINES KRAFTFAHRZEUGS UND MONTAGESYSTEM MIT EINER DICHTUNGSANORDNUNG UND EINER SÄULENBLENDE**

(71) Anmelder: DURA Automotive Holdings U.K., Ltd., Birmingham, West Midlands B35 7AG (GB)
(72) Erfinder: SCHULZE ZUR WIESCHE, Jochen, 51143 Köln (DE); BITTNER, Norfried, 58452 Witten (DE)
(74) Vertreter: Bungartz Christophersen mbB

(57) **Zusammenfassung**

Bei einer Dichtungsanordnung mit einem Einlegeteil, mittels dem die Dichtungsanordnung, eine Säulenblende und eine Türstruktur eines Kraftfahrzeugs unter Zwischenschaltung des Einlegeteils vor der Endbefestigung der Bauteile aneinander vorfixiert und zueinander ausgerichtet werden und bei einem eine solche Dichtungsanordnung umfassenden Montagesystem sind insbesondere zur Erleichterung der Montage ein Rastabschnitte vorgesehen, die zur Bildung von Eingriffspaarungen mit der Säulenblende bzw. der Türstruktur ausgebildet sind, so dass vor deren bestimmungsgemäßer Endmontage die Säulenblende, die Dichtungsanordnung und die Türstruktur unter Zwischenschaltung des Einlegeteils aneinander vorfixiert und zueinander vorausgerichtet werden können.

## Beschreibung

Die Erfindung betrifft eine Dichtungsanordnung mit einem Einlegeteil, mittels dem die Dichtungsanordnung, eine Säulenblende und eine Türstruktur eines Kraftfahrzeugs unter Einbindung des Einlegeteils vor der Endbefestigung der Bauteile aneinander vorfixiert und zueinander ausgerichtet werden sowie ein eine solche Dichtungsanordnung umfassendes Montagesystem.

Bei der Anordnung einer Säulenblende an einer Türstruktur ist nicht nur auf eine korrekte Positionierung der Säulenblende an der Türstruktur zu achten, sondern auch darauf, dass der stets angestrebte hohe Qualitätseindruck nicht durch etwaige Fehlstellungen an Bauteilübergängen zwischen Säulenblende, Schiebefenster, Hauptkarosserie, Türkarosserie und angrenzenden Dichtungen beeinträchtigt wird.

Vor allem im Bereich einer Fensterrahmenecke, die sich bei jedem Ein- und Aussteigen im unmittelbaren Sichtfeld der Fahrzeugnutzer befindet und somit einen merklichen Einfluss auf den beim Nutzer hervorgerufenen Qualitätseindruck hat, grenzen zahlreiche Bauteile aneinander an und müssen passgenau und funktionssicher zusammenwirken, nämlich unter anderem eine Säulenblende, eine Dichtungsanordnung mit oberseitiger Fensterdichtung und seitlicher Fensterführung, das Fenster selbst, die schwenkbare Türkarosserie, die feststehende Hauptkarosserie und gegebenenfalls weitere Karosserieanbauteile.

Die DE 10 2013 010 125 A1 und die DE 10 2015 004 982 A1 offenbaren ein Montagesystem mit einer Dichtungsanordnung und einem mit der Dichtungsanordnung verbundenen Einlegeteil, über das bei bestimmungsgemäß endmontierter Fahrzeugtür die Säulenblende, die Dichtungsanordnung und die Türkarosserie aneinander vorfixiert und zueinander vorausgerichtet sind. Allerdings sind diese Systeme hinsichtlich der Montagesicherheit, der Einfachheit der Montage und der Handhabung, der optischen Gefälligkeit und den konstruktiven und fertigungstechnischen Anforderungen, die zur Abstimmung der Bauteile aufeinander sowie zu deren Herstellung erforderlich sind, verbesserungsfähig.

Aufgabe der Erfindung ist es, eine Dichtungsanordnung der eingangs genannten Art zur Verfügung zu stellen, die eine sichere und einfache Montage ermöglicht, ein optisch gefälliges Ergebnis gewährleistet sowie geringe Anforderungen an die konstruktive Ausgestaltung und die Fertigung der einzelnen Komponenten stellt. Weiter soll die Gefahr von Fehlstellungen der Komponenten zueinander minimiert werden.

Diese Aufgabe wird durch eine Dichtungsanordnung nach Anspruch 1 gelöst. Vorteilhafte Weiterbildungen der Erfindung sind weiteren Ansprüchen 2 bis 14 zu entnehmen.

Danach umfasst eine Dichtungsanordnung, mittels der eine Säulenblende an einer Türstruktur eines Kraftfahrzeugs vor der Endbefestigung vorfixiert und relativ zur Türstruktur ausgerichtet wird, ein bei bestimmungsgemäßer Endmontage mit Dichtungsprofilen der Dichtungsanordnung verbundenes Einlegeteil, wobei
- ein erster Rastabschnitt und ein zweiter Rastabschnitt vorgesehen sind, die jeweils entweder an wenigstens einem einstückig mit dem Einlegeteil ausgebildeten Befestigungselement oder an wenigstens einem zum Einlegeteil separaten Befestigungselement ausgebildet sind, und wobei
- der erste Rastabschnitt zur Bildung einer ersten Eingriffspaarung mit der Säulenblende ausgebildet ist, um mittels der ersten Eingriffspaarung die Vorfixierung und Vorausrichtung der Säulenblende gegenüber dem Einlegeteil zu gewährleisten, und der zweite Rastabschnitt zur Bildung einer zweiten Eingriffspaarung mit der Türstruktur ausgebildet ist, um mittels der zweiten Eingriffspaarung eine Ausrichtung des Einlegeteils relativ zur Türstruktur zu gewährleisten,
so dass vor deren bestimmungsgemäßer Endmontage die Säulenblende, die Dichtungsanordnung und die Türstruktur unter Zwischenschaltung des Einlegeteils aneinander vorfixiert und zueinander vorausgerichtet werden können.

Die Säulenblende, die Dichtungsanordnung sowie die Türstruktur werden so über die mittels der beiden Rastabschnitte realisierten Eingriffspaarungen im Bereich der oberen Fensterrahmenecke miteinander verbunden und zueinander ausgerichtet, wobei die Verbindung und Ausrichtung der Bauteile über mindestens ein mit der Dichtungsanordnung bei der Endmontage der Fahrzeugtür fest verbundenes Einlegeteil möglich ist. Hierdurch ist gewährleistet, dass bei der Montage der Fahrzeugtür zunächst in einfacher Weise die Dichtungsanordnung positions- und verfahrenssicher auf die Türstruktur insbesondere verrastend aufgesteckt werden kann und eine Positionierung der Säulenblende unter Zwischenschaltung des Einlegeteils in einer Weise erfolgen kann, die dem Monteur eine einfache, werkzeuglose Vorfixierung und bei gleichzeitig einfacher Vorausrichtung der Bauteile zueinander ermöglicht.

Es kann insbesondere vorgesehen sein, dass wenigstens der zweite Rastabschnitt an einem bei endmontierter Fahrzeugtür in die Türstruktur eindringenden zweiten Befestigungselement ausgebildet ist. Das zweite Befestigungselement ist bevorzugt als männliches Befestigungselement derart ausgebildet, dass es ein die Türstruktur bildendes Karosserieblech durchdringt, um in einen Hohlraum der Türstruktur einzudringen. Der zweite Rastabschnitt kann hierzu Rastmittel aufweisen, die ausgebildet sind, die Türstruktur, also insbesondere das Karosserieblech, innenseitig zu hintergreifen. Dabei wird eine Ausgestaltung bevorzugt, bei der das zweite Befestigungselement durch eine Montageöffnung in einen von der Türstruktur gebildeten Hohlraum eingreift, ohne dass die Türstruktur auch auf der nach der Endmontage zum Fahrzeuginneren gewandten Türinnenseite durchdrungen wird oder dort eine Öffnung etwa für ein zusätzliches Befestigungsmittel vorzusehen ist. Auf der Türinnenseite muss der Monteur somit keine Maßnahmen ergreifen oder gar Befestigungsmittel wie Schrauben vorsehen, die ansonsten bei endmontierter Fahrzeugtür auf der Türinnenseite sichtbar wären und optisch kaschiert werden müssten bzw. von der Türinnenseite her zusätzlich zu montieren wären.

Bevorzugt ist ferner vorgesehen, dass der erste Rastabschnitt an einem ersten Befestigungselement ausgebildet sein kann, und der zweite Rastabschnitt zumindest bei sich in bestimmungsgemäßer Endmontage befindlicher Säulenblende achsparallel, bevorzugt koaxial, zum ersten Befestigungselement ausgerichtet ist. Sowohl die vom ersten Rastabschnitt als auch die vom zweiten Rastabschnitt gewährleisteten Rastwirkrichtungen, also die Richtungen, in die die von dem jeweiligen Rastabschnitt gewährleistete Verrastung einem ungewollten Lösen entgegenwirkt, sind im Wesentlichen in Fahrzeugquerrichtung (parallel zur y-Richtung) und bevorzugt parallel zueinander ausgerichtet und liegen weiter bevorzugt auf derselben Wirklinie. Beide Vorgänge, nämlich sowohl das Aufstecken des Einlegeteils und damit der Dichtungsanordnung auf die Türstruktur als auch das anschließende Aufstecken der Säulenblende auf oder in das Einlegeteil, können infolge dieser Ausgestaltung in denkbar einfacher Weise durch den Monteur beide mit einer in y-Richtung ausgerichteten Aufsteckrichtung und insbesondere in gleichgerichteten Aufsteckbewegungen ausgeführt werden, so dass das Aufsetzen der Säulenblende auf den ersten Rastabschnitt des Einlegeteils zur Aufsteckrichtung des zweiten Befestigungselements gleichgerichtet ist und die entsprechende Aufsteckbewegung unterstützt. Beim Aufstecken der Säulenblende auf das Einlegeteil besteht so außerdem nicht die Gefahr, dass die zweite Eingriffspaarung versehentlich aufgehoben wird.

Eine bevorzugte Ausführungsform sieht vor, dass das Einlegeteil mit einer ersten Aufnahme zur Befestigung eines den ersten Rastabschnitt bildenden und vom Einlegeteil ursprünglich separaten ersten Befestigungselements und/oder mit einer zweiten Aufnahme zur Befestigung eines den zweiten Rastabschnitt bildenden und vom Einlegeteil ursprünglich separaten zweiten Befestigungselements versehen ist. Bevorzugt ist wenigstens eine Aufnahme von wenigstens einer Aussparung im Einlegeteil gebildet. Bevorzugt kann wenigstens eines der Befestigungselemente das Einlegeteil durch die Aussparung hindurch durchdringen.

Es kann auch vorgesehen sein, dass das erste Befestigungselement und somit der erste Rastabschnitt und/oder das zweite Befestigungselement und somit der zweite Rastabschnitt integraler Bestandteil des Einlegeteils sind und/oder werkstoffeinstückig mit dem Einlegeteil ausgebildet sind.

Das zweite Befestigungselement und somit der zweite Rastabschnitt ist bevorzugt auf der bei bestimmungsgemäßer Montage der Fahrzeugtür zum Fahrzeug weisenden Seite des Einlegeteils positioniert. Das erste Befestigungselement und somit der erste Rastabschnitt kann entweder auf der bei bestimmungsgemäßer Montage der Fahrzeugtür vom Fahrzeug wegweisenden Seite des Einlegeteils positioniert oder aber auf der bei bestimmungsgemäßer Montage der Fahrzeugtür zum Fahrzeug weisenden Seite des Einlegeteils positioniert sein. Letzteres ist insbesondere dann denkbar, wenn der erste Rastabschnitt und der zweite Rastabschnitt Teil einer Verbindungshülse sind, die sowohl das erste Befestigungselement als auch das zweite Befestigungselement ausbildet und an der innenseitig der erste Rastabschnitt und außenseitig der zweite Rastabschnitt ausgebildet ist.

In einer Ausführungsform, bei der ein den ersten Rastabschnitt bildendes erstes Befestigungselement und ein den zweiten Rastabschnitt bildendes zweites Befestigungselement vorgesehen ist, können beide Befestigungselemente als vom Einlegeteil ursprünglich separate Bauteile vorgesehen sein, wobei die beiden Befestigungselemente unter Anordnung des Einlegeteils zwischen beiden Befestigungselementen miteinander und/oder mit dem Einlegeteil verbunden werden können. Insbesondere kann vorgesehen sein, dass die beiden Befestigungselemente derart ausgebildet sind, dass das Einlegeteil zwischen dem ersten und zweiten Befestigungselement angeordnet ist während das erste und zweite Befestigungselement miteinander in Eingriff stehen. Bevorzugt dringt beim Zusammenführen der beiden Befestigungselemente ein Befestigungselement unter Bildung einer form- und/oder kraftschlüssigen Verbindung in das andere Befestigungselement zumindest teilweise ein. Weiter bevorzugt verrasten die beiden Befestigungselemente miteinander. Die Befestigungselemente können nach dem Zusammenführen insbesondere koaxial zueinander angeordnet sein.

Bevorzugt weist das erste Befestigungselement einen ersten Stützflansch und/oder das zweite Befestigungselement einen zweiten Stützflansch auf, wobei der erste und/oder der zweite Stützflansch insbesondere durch einen am jeweiligen Verbindungsabschnitt ausgebildeten Ringscheibenabschnitt gebildet sein kann. Der erste Stützflansch und der zweite Stützflansch bilden eine Stützfläche am jeweiligen Befestigungselement aus und sind dazu vorgesehen, zumindest teilweise an einer ersten bzw. zweiten Stützfläche des Einlegeteils, insbesondere an einer Stützfläche der die erste oder zweite Aufnahme bildenden Aussparung, axial und/oder radial in Anlage zu kommen. Durch die axiale und/oder radiale Anlage des jeweiligen Stützflansches an dem Einlegeteil wird die axiale und/oder radiale Position des jeweiligen Befestigungselements in Relation zum Einlegeteil vorgegeben. Bevorzugt ist das Einlegeteil zwischen dem ersten Stützflansch und dem zweiten Stützflansch gehalten.

Vorzugsweise ist der zweite Rastabschnitt des zweiten Befestigungselements nach Art eines Bajonettverschlusses ausgebildet und derart an eine Montageöffnung in der Türstruktur angepasst, dass das zweite Befestigungselement in einer Montageausrichtung in Aufsteckrichtung in die Montageöffnung in der Türstruktur einführbar ist und nach Einführen in die Montageöffnung an der Türstruktur drehbar ist, um in eine Verriegelungsausrichtung überführt zu werden, in der zumindest ein Rastglied des zweiten Rastabschnitts die Türstruktur innenseitig hintergreift. Mithin kann zumindest das zweite Befestigungselement durch Verdrehen gegenüber der Türstruktur in Rastwirkrichtung axial gesichert werden, wodurch auch das erste Verbindungelement und das Einlegeteil gegenüber der Türstruktur axial gesichert werden. So kann durch ein einfaches Aufstecken und Verdrehen des zweiten Befestigungselements aus der Montageausrichtung in die Verriegelungsausrichtung eine Vorfixierung der mit dem Einlegeteil fest verbundenen Dichtungsprofile an der Türstruktur erfolgen.

Zwischen dem ersten Befestigungselement und/oder dem zweiten Befestigungselement auf der einen und dem Einlegeteil auf der anderen Seite kann die Verdrehsicherung vorgesehen sein, um ein ungewolltes Verdrehen zumindest des zweiten Befestigungselements gegenüber dem Einlegeteil zu verhindern. Hierdurch wird das gegenüber dem Einlegeteil verdrehgesicherte Befestigungselement in der für die Montage erforderlichen Ausrichtung gehalten und die bei der Montage auftretenden Momente werden unterstützend abgestützt.

Zwecks Herstellung der ersten Eingriffspaarung mit dem ersten Rastabschnitt bzw. der zweiten Eingriffspaarung mit dem zweiten Rastabschnitt sind an der Säulenblende bzw. in der Türstruktur ein zu dem ersten Rastabschnitt bzw. dem zweiten Rastabschnitt korrespondierendes erstes Gegenstück bzw. zweites Gegenstück vorgesehen, über die die jeweiligen Eingriffspaarungen der Bauteile realisiert werden.

Bevorzugt sind der erste und zweite Rastabschnitt jeweils an einem männlichen Verbindungsfortsatz ausgebildet, der das erste bzw. zweite Befestigungselement bildet. Zur Bildung der ersten Eingriffspaarung ist als weibliches korrespondierendes erstes Gegenstück zum ersten Rastabschnitt ein Aufnahmeelement an der Säulenblende und zur Bildung der zweiten Eingriffspaarung ist als weibliches korrespondierendes zweites Gegenstück eine Montageöffnung in der Türstruktur vorgesehen. Es kann aber auch vorgesehen sein, dass insbesondere der erste Rastabschnitt von einer weiblichen Rastaufnahme gebildet ist und an der Säulenblende zur Bildung der ersten Eingriffspaarung als hierzu korrespondierendes männliches Gegenstück als männlicher Verbindungsfortsatz vorgesehen ist.

Das Befestigungssystem kann eine Reihe von Maßnahmen vorsehen, die eine optimale Ausrichtung der Bauteile Säulenblende, Dichtungsanordnung und Türstruktur zueinander ermöglichen.

Zunächst kann vorgesehen sein, dass die erste Eingriffspaarung, insbesondere der erste Rastabschnitt, und/oder die zweite Eingriffspaarung, insbesondere der zweite Rastabschnitt, in zumindest einer Richtung quer zur Aufsteckrichtung (also im Wesentlichen in x-Richtung und/oder in z-Richtung und damit quer zur y-Richtung) nachgiebig ausgebildet sind, so dass auch nach bestimmungsgemäßer Herstellung der ersten und zweiten Eingriffspaarung quer zur Aufsteckrichtung eine zumindest geringe Ausrichtungskorrektur vor der Endfixierung möglich ist.

Insbesondere kann der erste Rastabschnitt und/oder der zweite Rastabschnitt außenseitig eine nachgiebige Struktur aufweisen, die sich bei radial nach innen aufgebrachter Belastung quer zur Aufsteckrichtung nachgiebig verhält. Dadurch, dass eine oder beide der Eingriffspaarungen, bevorzugt der jeweils betreffende Rastabschnitt selbst, auch bei hergestellter Rastverbindung nach wie vor eine zumindest geringfügige Ausrichtungskorrektur vor endgültiger Fixierung der Säulenblende zulässt, ist es dem Monteur möglich, zunächst geringe toleranzbedingte Fehlausrichtungen auszugleichen und erst anschließend die Säulenblende gegenüber der Türstruktur und/oder der Dichtungsanordnung über die hierfür vorgesehenen Befestigungsmittel final zu fixieren. Eine derart nachgiebige Ausgestaltung der Rastverbindungen minimiert außerdem auch die bei endmontierter Fahrzeugtür über die Rastverbindung auf die Säulenblende wirkenden Spannungen.

Die vorstehend beschriebene Möglichkeit der Ausrichtungskorrektur kann zusätzlich oder alternativ zur einer nachgiebigen Ausgestaltung des ersten und/oder zweiten Rastabschnitts auch durch eine quer zur Aufsteckrichtung nachgiebige Ausgestaltung der korrespondierenden ersten und/oder zweiten Gegenstücke an der Säulenblende und/oder an der Türstruktur gewährleistet werden.

Zur Gewährleistung der gewünschten Nachgiebigkeit der ersten und/oder zweiten Eingriffspaarung kann eine Vielzahl von tannenbaumartig angeordneten radial nach innen nachgiebigen Rastvorsprüngen am ersten Rastabschnitt und/oder am zweiten Rastabschnitt vorgesehen sein. Eine derartige tannenbaumartige Struktur kann außerdem in gewissen Grenzen eine Einstellbarkeit bzw. Kontrolle der Eindringtiefe der die erste und/oder zweite Eingriffspaarung gewährleistenden Befestigungselemente ermöglichen.

Gemäß einer Ausführungsform des die Dichtungsanordnung umfassenden Montagesystems kann die Säulenblende zur Gewährleistung der ersten Eingriffspaarung als zum ersten Rastabschnitt korrespondierendes erstes Gegenstück ein ringartiges Aufnahmeelement aufweisen, das kreisrund oder oval oder langlochartig ausgebildet sein kann und das eingerichtet ist, das erste Befestigungselement mit dem ersten Rastabschnitt aufzunehmen. Das ringartige Aufnahmeelement ist bevorzugt von der bei bestimmungsgemäßer Endmontage zum Fahrzeug weisenden Innenseite der Säulenblende beabstandet und über einen Steg mit der Innenseite der Säulenblende verbunden. Das Eindringen des ersten Rastabschnitts in das an der Säulenblende ausgebildete Aufnahmeelement schafft die erste Eingriffspaarung.

Bei einer runden Ausgestaltung des Aufnahmeelements an der Säulenblende bildet die erste Eingriffspaarung eine 4-Wege-Fixierung der Säulenblende gegenüber dem Einlegeteil und damit gegenüber der Dichtungsanordnung. Eine solche Eingriffspaarung lässt bei vorstehend beschriebener radial nachgiebiger Ausgestaltung des ersten Rastabschnitts nur eine geringe Ausrichtungskorrektur bzw. Nachjustierung in x- oder z-Richtung (quer zur Aufsteckrichtung) zu.

Bei einer ovalen bzw. langlochartigen Ausgestaltung des ringartigen Aufnahmeelements an der Säulenblende bildet die Eingriffspaarung eine 2-Wege-Fixierung der Säulenblende gegenüber dem Einlegeteil und damit gegenüber der Dichtungsanordnung. Eine solche Eingriffspaarung lässt eine über die bloße Nachgiebigkeit der Eingriffspaarung hinausgehende Ausrichtungskorrektur bzw. Nachjustierung der Säulenblende gegenüber der Dichtungsanordnung und der Türstruktur in x- oder z-Richtung zu.

Bevorzugt ist das Aufnahmeelement derart oval bzw. langlochartig ausgebildet, dass die Eingriffspaarung eine Ausrichtungskorrektur in x-Richtung zulässt. Weiter bevorzugt ist das Aufnahmeelement derart ausgebildet, dass bei zwischen Säulenblende und Einlegeteil hergestellter erster Eingriffspaarung die Säulenblende relativ zum Einlegeteil in x-Richtung und/oder y-Richtung im einstelligen Millimeterbereich, vorzugsweise zwischen 1 mm und 5 mm, beweglich ist.

Das zu dem zweiten Rastabschnitt korrespondierende und die zweite Eingriffspaarung zwischen das Einlegeteil und der Türstruktur gewährleistende Gegenstück ist bevorzugt von einer Montageöffnung in einem die Türstruktur bildenden Karosserieblech gebildet, durch die der den zweiten Rastabschnitt aufweisende Teil des zweiten Befestigungselements in die Türstruktur einzudringen vermag. Auch diese Montageöffnung kann wie das an der Säulenblende vorgesehene Aufnahmeelement rund oder oval bzw. langlochartig ausgebildet sein, um eine Ausrichtungskorrektur der Dichtungsanordnung gegenüber der Türstruktur und damit gleichzeitig auch der Säulenblende gegenüber der Türstruktur zuzulassen, denn aufgrund der Zwischenschaltung des Einlegeteils zwischen Türstruktur und Säulenblende überträgt sich eine solche Ausrichtungskorrektur des Einlegeteils auf die Säulenblende.

Bevorzugt lässt die Montageöffnung in der Türstruktur eine Ausrichtungskorrektur in einer ersten Richtung quer zur im Wesentlichen in y-Richtung ausgerichteten Aufsteckrichtung zu (im Wesentlichen in x- bzw. z-Richtung) und das an der Säulenblende vorgesehene Aufnahmeelement lässt eine Ausrichtungskorrektur in einer zweiten Richtung quer zur Aufsteckrichtung zu (im Wesentlichen in z- bzw. x-Richtung).

In einer besonderen Ausgestaltung ist vorgesehen, dass der erste Rastabschnitt innenseitig und der zweite Rastabschnitt außenseitig einer Befestigungshülse ausgebildet sind. Die Befestigungshülse vereint so das erste und zweite Befestigungselement in sich und kann in die das zweite Gegenstück bildende Montageöffnung in der Türstruktur verrastend eingedrückt werden oder mit dieser wie zuvor beschrieben bajonettartig zusammenwirken. Ein an der Säulenblende vorgesehener Verbindungsfortsatz kann dann die Befestigungshülse durchdringen, um die Säulenblende sowohl mit dem Einlegeteil und damit mit der Dichtungsanordnung als auch mit der Türstruktur zu verbinden. Die vorstehenden Maßnahmen zur Gewährleistung einer (radialen) Nachgiebigkeit des ersten Rastabschnitts quer Aufsteckrichtung können auch an dem an der Säulenblende vorgesehenen Verbindungsfortsatz vorgesehen sein.

Die Dichtungsanordnung umfasst insbesondere eine Fensterführungsdichtung, von der eine bewegliche Fensterscheibe, insbesondere also eine innerhalb einer Türstruktur vorgesehene im Wesentlichen in z-Richtung (parallel zur Fahrzeughochachse) bewegliche Versenkscheibe, bei einer Öffnungs- und Schließbewegung geführt wird, und/oder gegen die eine derart bewegliche Versenkscheibe mit ihrer oberen Kante bei geschlossenem Fenster dichtend in Anlage kommt.

Die Dichtungsanordnung kann insbesondere extrudierte Dichtungsprofile aufweisen, die die im Bereich des Einlegeteils über eine Formmasse, die bevorzugt von einem Polymerwerkstoff gebildet ist, zumindest stoffschlüssig mit dem Einlegeteil verbunden sind. Zur Verbindung der Dichtungsanordnung wird das Einlegeteil nebst den bevorzugt extrudierten Dichtungsabschnitten in ein Spritzgusswerkzeug eingelegt. Dann wird eine die die Dichtungsabschnitte mit dem Einlegeteil verbindende Formmasse eingespritzt, die somit die Dichtungsabschnitte mit dem Einlegeteil nach Art eines Klebers zur Dichtungsanordnung verbindet.

Weitere Merkmale und Vorteile der Erfindung ergeben sich aus der nachfolgenden Beschreibung bevorzugter Ausführungsbeispiele anhand der schematischen Zeichnungen. In den Zeichnungen zeigen:
- Fig. 1: eine geschnittene Explosionsdarstellung eines Einlegeteils sowie eines ersten und zweiten Befestigungselements gemäß einem ersten Ausführungsbeispiel,
- Fig. 2: eine perspektivische Explosionsdarstellung des ersten Ausführungsbeispiels,
- Fig. 3: eine perspektivische Darstellung des ersten Ausführungsbeispiels im montierten Zustand,
- Fig. 4a: eine perspektivische Darstellung des ersten Ausführungsbeispiels mit Blick auf die Türinnenseite, bei dem das zweite Befestigungselement ein Karosserieblech einer Türstruktur eines Kraftfahrzeugs in einem Hohlraum hinein in einer Montageausrichtung durchdringt,
- Fig. 4b: eine perspektivische Darstellung des ersten Ausführungsbeispiels mit Blick auf die Türinnenseite, bei dem das zweite Befestigungselement ein Karosserieblech einer Türstruktur eines Kraftfahrzeugs in einem Hohlraum hinein in einer Verriegelungsausrichtung durchdringt,
- Fig. 5: eine Schnittdarstellung einer Türstruktur mit in einem in die Türstruktur eindringenden zweiten Befestigungselement und einer auf das erste Befestigungselement aufgesetzten Säulenblende,
- Fig. 6: eine perspektivische Darstellung des Einlegeteils vor dessen Montage an der Türstruktur eines Kraftfahrzeugs mit Blick auf die Türaußenseite,
- Fig. 7: eine Schnittdarstellung eines zweiten Ausführungsbeispiels aus Figur 6 mit einer auf die Türstruktur aufgesetzten Säulenblende unter Herstellung sowohl der ersten als auch der zweiten Eingriffspaarung,
- Fig. 8: eine Schnittdarstellung des Ausführungsbeispiels gemäß Fig. 7 im montierten Zustand der Säulenblende mit zwischen Säulenblende und Türstruktur gehaltener Fensterführungsdichtung und,
- Fig. 9: eine geschnittene Explosionsdarstellung einer dritten Ausführungsform,
- Fig. 10: eine Schnittdarstellung der dritten Ausführungsform gemäß Fig. 9 im montierten Zustand der Säulenblende,
- Fig. 11: eine Perspektivdarstellung einer Rückseite der Säulenblende mit einer daran angeordneten 4-wege Fixierung in Form eines kreisrunden Aufnahmeelements, und
- Fig. 12: eine Perspektivdarstellung der Rückseite der Säulenblende mit einer daran angeordneten 2-wege Fixierung in Form eines langlochartigen Aufnahmeelements.

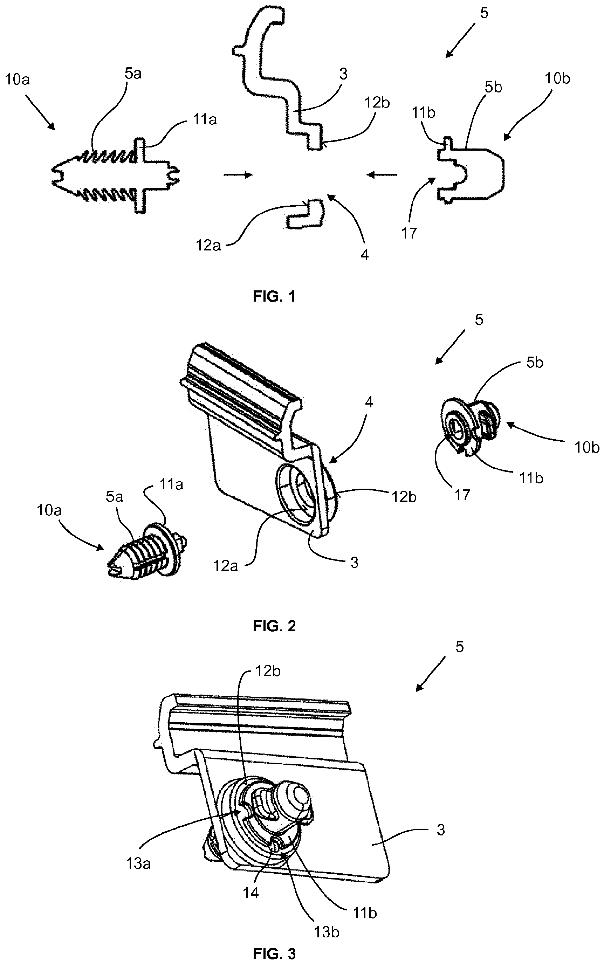

Gemäß den Figuren 1 und 2 bilden ein erstes Befestigungselement 10a und ein zweites Befestigungselement 10b gemeinsam eine zweiteilig ausgebildete Befestigungseinrichtung 5. Die beiden Befestigungselemente 10a, 10b sind koaxial zueinander angeordnet und dazu vorgesehen, zumindest teilweise ineinander einzudringen, um miteinander eine Rastverbindung einzugehen. Vorliegend weist das zweite Befestigungselement 10b eine Ausnehmung 17 auf, die im Wesentlichen komplementär zu einem distalen Ende des ersten Befestigungselements 10a ausgebildet ist, wobei die Ausnehmung 17 am zweiten Befestigungselement 10b dazu vorgesehen ist, das erste Befestigungselement 10a teilweise aufzunehmen und positionsfest zu halten. Dadurch ist eine zumindest kraftschlüssige Verbindung zwischen den beiden Befestigungselementen 10a, 10b geschaffen.

Die Befestigungselemente 10a und 10b und somit die Befestigungseinrichtung 5 sind im Wesentlichen zylinderförmig ausgebildet und weisen einen ersten Rastabschnitt 5a mit einer Vielzahl von radial nachgiebigen, umlaufenden Rastzähnen sowie einen zweiten Rastabschnitt 5b auf, wobei der erste Rastabschnitt 5a an einer Mantelfläche des ersten Befestigungselements 10a ausgebildet ist, und wobei der zweite Rastabschnitt 5b an einer Mantelfläche des zweiten Befestigungselements 10b ausgebildet ist. Axial zwischen dem ersten und dem zweiten Befestigungselement 10a, 10b ist ein Einlegeteil 3 mit einer Aussparung 4 angeordnet.

Das erste Befestigungselement 10a weist einen ersten Ringscheibenabschnitt 11a auf, der dazu vorgesehen ist, zumindest teilweise mit einer ersten Stirnfläche 12a des Einlegeteils 3 in Anlage zu kommen. Das zweite Befestigungselement 10b weist einen zweiten Ringscheibenabschnitt 11 b auf, der dazu vorgesehen ist, zumindest teilweise an einer zweiten Stirnfläche 12b des Einlegeteils 3 zur Anlage zu kommen. Mithin wird die Befestigungseinrichtung 5 über die beiden Ringscheibenabschnitte 11a, 11b zumindest axial am Einlegeteil 3 fixiert bzw. das Einlegeteil zwischen den beiden Befestigungselementen 10a, 10b gehalten.

In Figur 3 ist die Befestigungseinrichtung 5 im montierten Zustand am Einlegeteil 3 dargestellt. Aus dieser perspektivischen Darstellung geht deutlich hervor, dass der zweite Ringscheibenabschnitt 11 b ein erstes Rastelement 13a in und ein zweites Rastelement 13b jeweils in Form einer seitlichen Ausklinkung aufweist, wobei die beiden Rastelemente 13a, 13b dazu vorgesehen sind, mit einem hierzu korrespondierenden Rastelement 14 an der zweiten Stirnfläche 12b des Einlegeteils 3 in Form eines Vorsprungs formschlüssig verrastend zusammenzuwirken, um das zweite Befestigungselement 10b in einer Montageposition bzw. in einer Verriegelungsposition gegenüber dem Einlegeteil 3 zu fixieren. Mit anderen Worten sind die beiden Aussparungen 13a, 13b und der Vorsprung 14 als Verdrehsicherung vorgesehen, um ein ungewolltes Verdrehen der Befestigungseinrichtung 5, insbesondere des zweiten Befestigungselements 10b und des hiermit bevorzugt drehfest verbundenen Einlegeteils 3 nach vorgenommener Vorfixierung der Dichtungsanordnung an einer Türstruktur zu verhindern.

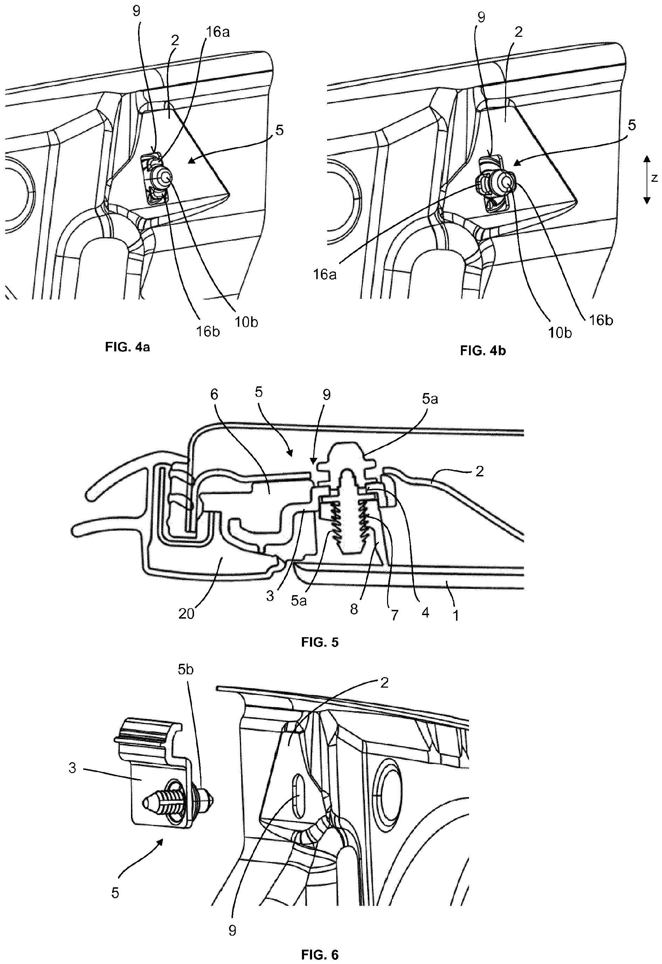

Die Figuren 4a und 4b zeigen die erfindungsgemäße Befestigungseinrichtung 5 gemäß den vorhergehenden Figuren an einer Türstruktur 2 eines - nicht weiter dargestellten - Kraftfahrzeugs, wobei ein Hohlraum, in den das zweite Befestigungselement eindringt, zeichnerisch freigeschnitten ist. Das zweite Befestigungselement 10b weist bevorzugt einen ersten und einen zweiten radial ausgebildeten Flügel 16a, 16b auf, wobei die beiden Flügel 16a, 16b dazu vorgesehen sind, die Befestigungseinrichtung 5 in der Verriegelungsposition axial an der Türstruktur 2 zu fixieren. Das zweite Befestigungselement 10b der Befestigungseinrichtung 5 ist nach Durchdringen des Karosserieblechs in axialer Richtung drehbar in eine Montageöffnung 9 an der Türstruktur 2 aufgenommen.

Die Montageöffnung 9 ist langlochartig ausgebildet, so dass das zweite Befestigungselement die Montageöffnung 9 mit seinen zwei radial ausgebildeten Bajonettflügeln 16a, 16b in axialer Richtung (bezogen auf das Kraftfahrzeug bevorzugt in y-Richtung) durchdringen kann. Gleichzeitig gewährleistet die langlochartige Ausbildung der Montageöffnung 9 eine Beweglichkeit zumindest des zweiten Befestigungselements 10b in z-Richtung, so dass auch in der Verriegelungsposition gemäß Figur 4b, in der die Bajonettflügel 16a und 16b das Karosserieblech innenseitig hintergreifen, eine Ausrichtungskorrektur der Dichtungsanordnung zumindest in z-Richtung erhalten bleibt.

In Figur 5 ist eine Dichtungsanordnung gemäß den vorhergehenden Figuren geschnitten dargestellt, wobei auf die Türstruktur 2 eine Säulenblende 1 aufgesetzt ist. Die Dichtungsanordnung dient auch zur Aufnahme der Säulenblende 1 an der Türstruktur 2 des Kraftfahrzeugs und umfasst das Einlegeteil 3 mit der Aussparung 4 zur Aufnahme des ersten Befestigungselements 10a und des zweiten Befestigungselements 10b. Das Einlegeteil 3 ist stoffschlüssig mit einer Formmasse 6, bevorzugt einem Polymerwerkstoff, verbunden, insbesondere zumindest teilweise von dieser Formmasse 6 umspritzt. Die Formmasse 6 steht außerdem mit Dichtungsprofilen 20 zumindest stoffschlüssig in Kontakt, so dass das Einlegeteil 3 über die Formmasse 6 auch fest mit den Dichtungsprofilen 20 der Dichtungsanordnung verbunden ist.

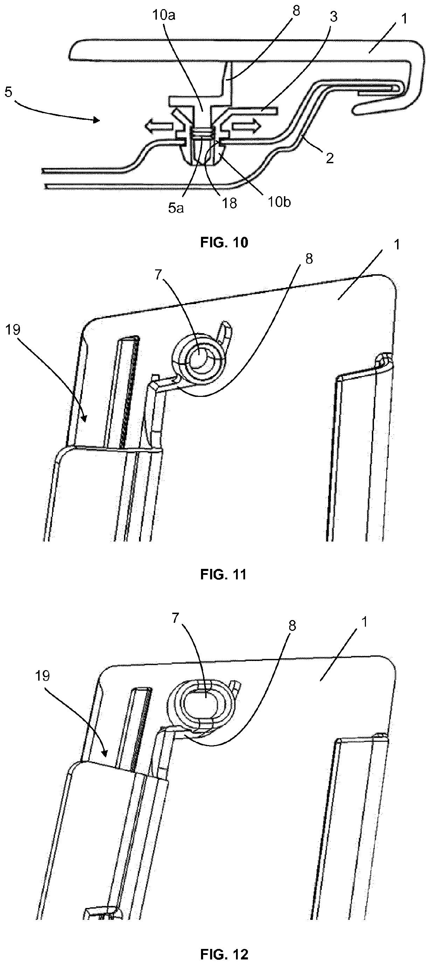

Der erste Rastabschnitt 5a durchdringt ein ringförmiges Aufnahmeelement 7 der Säulenblende 1 (siehe auch Figuren 11 und 12), um die Säulenblende 1 mit dem Einlegeteil 3 zu verbinden und gegenüber den mit dem Einlegeteil 3 verbundenen Dichtungsprofilen 20 und gegenüber der Türstruktur 2 vorzufixieren. Das ringförmige Aufnahmeelement 7, das über einen Verbindungssteg 8 mit der Säulenblendenrückseite verbunden ist und von dem Verbindungssteg 8 zur Rückseite auf Abstand zur Säulenblendenrückseite gehalten wird, fungiert als zum ersten Befestigungselement 10a korrespondierendes weibliches Gegenstück.

Anders als in Figuren 4a und 4b ist in Figur 6 zu Veranschaulichungszwecken das Einlegeteil 3 unmittelbar vor Montage an der Türstruktur 2 des Kraftfahrzeugs unter zeichnerischer Weglassung der mit dem Einlegeteil 3 eigentlich über die Formmasse 6 verbundenen Dichtungsprofile 20 (siehe Figur 5) vor dem Aufsetzen auf die Türstruktur 2 mit Blick auf die Türaußenseite dargestellt. Das zweite Befestigungselement 10b der Befestigungseinrichtung 5 wird in die in der Türstruktur 2 als Langloch ausgebildete Montageöffnung 9 in y-Richtung (Aufsteckrichtung) aufgesteckt, bleibt nach dem Aufstecken aber durch die langlochartige Ausbildung der Montageöffnung 9 in geringem Umfang z-Richtung verschieblich.

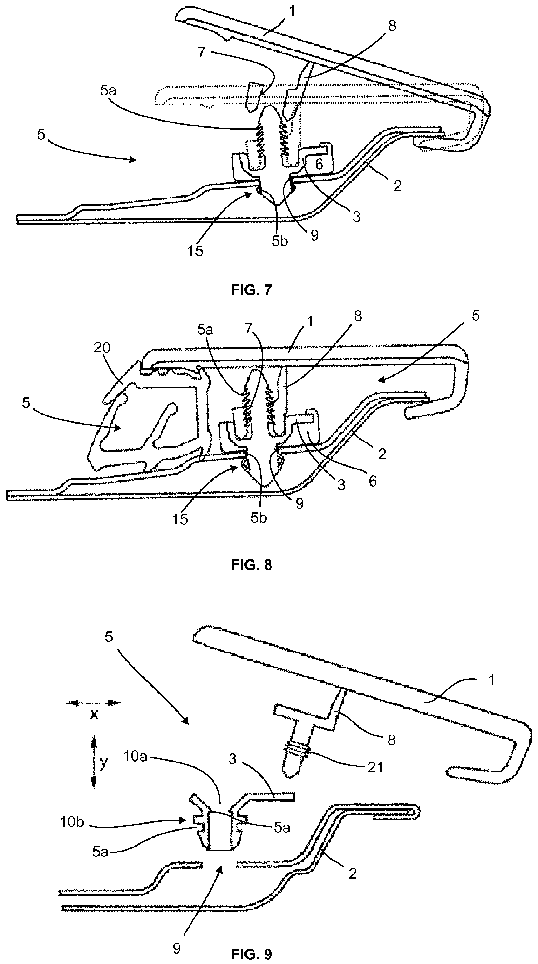

In den Figuren 7 und 8 ist die Dichtungsanordnung mit dem Einlegeteil 3 und den beiden Befestigungselementen 10a und 10b geschnitten dargestellt. Dabei zeigt Figur 7 die Dichtungsanordnung vor der Montage und Figur 8 zeigt die Dichtungsanordnung nach Vornahme der Vorfixierung der Säulenblende. In Figur 7 ist ferner gepunktet die Endposition der an der Türstruktur 2 mittels des ersten Befestigungselements 10a vorfixierten Säulenblende 1 gestrichelt dargestellt, um die Aufsetzbewegung der Säulenblende 1 zu verdeutlichen. Anders als bei der in den vorherigen Figuren gezeigten Ausführungsform sind bei der in Figur 6, Figur 7 und Figur 8 gezeigten Ausführungsform das Einlegeteil 3 und die beiden Befestigungselemente 10a und 10b einstückig ausgeführt. Die über die Formmasse (Figur 5) mit dem Einlegeteil 3 verbundenen Dichtungsprofile sind zeichnerisch weggelassen.

Wie aus den Figuren ersichtlich ist die Dichtungsanordnung mit dem Einlegeteil zur Aufnahme der Säulenblende 1 an der Türstruktur 2 des Kraftfahrzeugs vorgesehen und umfasst das Einlegeteil 3 mit den einteilig daran ausgebildeten Befestigungselementen. Die Säulenblende 1 wird an einer Seite der Türstruktur 2 des Kraftfahrzeugs eingehangen und auf das bereits gegenüber der Türstruktur 2 vorfixierte Einlegeelement 3 gedrückt. Das Einlegeteil 3 ist dabei stoffschlüssig über die Formmasse 6 mit einem Dichtungsprofil 20 verbunden, das eine ein vertikal verschiebliche Versenkscheibe führende Fensterführungsdichtung bildet, die zwischen Türstruktur 2 und Säulenblende 1 gehalten ist. Der Kontaktbereich, in dem das Dichtungsprofil 20 und die Formmasse 6 in Kontakt stehen, befindet sich außerhalb der Zeichenebene.

Die die beiden Befestigungselemente 10a und 10b umfassende Befestigungseinrichtung 5 ist im Wesentlichen zylinderförmig ausgebildet und weist einen Rastabschnitt 5a mit einer Vielzahl von radial nachgiebigen Rastzähnen sowie den zweiten Rastabschnitt 5b auf. Der Rastabschnitt 5a ist in einem ringartigen Aufnahmeelement 7 an der Säulenblende 1 angeordnet, der über einen Verbindungssteg 8 auf Abstand zur Säulenblendenrückseite gehalten ist. Durch die tannenbaumartige Struktur und die radiale Nachgiebigkeit der den ersten Rastabschnitt 5a bildenden Rastzähne ist eine radial nachgiebige Struktur geschaffen, durch die die Säulenblende 1 derart flexibel mit dem Einlegeteil 3 verbunden ist, dass auch nach dem Aufsetzen der Säulenblende auf die Türstruktur bzw. die Dichtungsanordnung eine Nachjustierung der Säulenblende gegenüber der Türstruktur und der Dichtungsanordnung möglich bleibt.

Der zweite Rastabschnitt 5b ist in einer Montageöffnung 9 an der Türstruktur 2 angeordnet, um das Einlegeteil 3 an der Türstruktur 2 vorzufixieren und weist hierzu einen radialen Rastvorsprung 15 auf, der die Türstruktur 2 innenseitig zu hintergreifen vermag.

Figuren 9 und 10 zeigen ein weiteres Ausführungsbeispiel einer, ein Einlegeteil mit ersten bzw. zweiten Befestigungselement 10a bzw. 10b aufweisenden Dichtungsanordnung im Schnitt. Dabei zeigt Figur 9 das von der Türstruktur, der Dichtungsanordnung und der Säulenblende gebildete Montagesystem vor der Vorfixierung und Figur 10 das Montagesystem nach Abschluss der Vorfixierung der Bauteile aneinander. Die in den vorherigen Figuren noch gezeigte Formmasse 6 bzw. die Dichtungsprofile sind zeichnerisch weggelassen.

Das erste Befestigungselement 10a und zweite Befestigungselement 10b sind beide Teil des Einlegeteils 3, das zur Bildung des ersten Rastabschnitts 5a und des zweiten Rastabschnitts 5b eine dübelartige Befestigungshülse ausbildet, die in die in der Türstruktur 2 vorgesehene Montageöffnung 9 eingeführt werden kann und ein die Türstruktur bildendes Karosserieblech mittels des zweiten Rastabschnitts 5b innenseitig zu hintergreifen vermag. Anders als in den zuvor beschriebenen Ausführungsformen ist der erste Rastabschnitt 5a innenseitig in der Befestigungshülse ausgebildet, so dass das erste Befestigungselement 10a als weibliches Befestigungselement ausgeführt ist.

Die Säulenblende 1 weist daher als Pendant zu dem zuvor beschriebenen ringförmigen Aufnahmeelement 9 ein männliches Eingriffselement 21 auf, das in Form eines Positionierdorns ausgeführt ist und mit dem Rastabschnitt 5a zu verrasten vermag. Das Eingriffselement 21 ist dabei, wie auch das zuvor beschriebene ringförmige Aufnahmeelement 9, einstückig mit der Säulenblende 1 ausgeführt und über einen Verbindungssteg 8 mit der Säulenblendenrückseite verbunden sowie mittels des Verbindungsstegs 8 auf Abstand zur Säulenblende gehalten.

Figur 10 illustriert, dass das Eingriffselement 21 als Spreizelement wirkt, das unter leichter Aufspreizung der dübelartigen Befestigungshülse eine Vorfixierung der Säulenblende 1 an der Türstruktur 2 ermöglicht.

Allen vorstehend beschriebenen Ausführungsformen ist gemein, dass die Aufsetzrichtung der Säulenblende 1 auf das Einlegeteil 3 und die Aufsetzrichtung, in der das Einlegeteil 3 und damit die der Dichtungsanordnung zugehörigen Dichtungsprofile 20 auf die Türstruktur 2 aufgesetzt werden, gleichgerichtet sind. Weiter ist allen vorstehend beschriebenen Ausführungsformen gemein, dass das erste Befestigungselement 10a mit dem ersten Rastabschnitt 5a sowie das zweite Befestigungselement 10b mit dem zweiten Rastabschnitt 5b koaxial zueinander angeordnet sind. Weiter zeigen alle Ausführungsformen eine Ausgestaltung, bei der ausschließlich das bei geschlossener Tür in y-Richtung zur Fahrzeugaußenseite weisende Karosserieblech der Türstruktur eine einzelne Aufnahmeöffnung aufweist.

Schließlich kann bei jeder der gezeigten Ausführungsformen durch eine entsprechende Ausgestaltung der ersten Eingriffspaarung und/oder durch eine entsprechende Ausgestaltung der zweiten Eingriffspaarung eine Ausrichtungskorrektur nach erfolgter Vorfixierung ermöglicht werden. Dies wird insbesondere durch eine langlochartige Ausgestaltung einer oder beider der weiblichen Gegenstücke der jeweiligen Eingriffspaarungen (Montageöffnung 9 oder ringförmiges Aufnahmeelement 7) und/oder durch eine radial nachgiebige Struktur der Rastabschnitte an den männlichen Befestigungselementen, etwa durch die tannenbaumartige Struktur eines Befestigungselements.

Figur 11 zeigt eine Rückansicht der Säulenblende 1, die in Figur 7 und Figur 8 gezeigt ist. Die Säulenblende 1 weist ein ringförmiges Aufnahmeelement 7 auf, das über einen Verbindungssteg 8 mit der Säulenblendenrückseite verbunden und hierüber zur Säulenblendenrückseite auf Abstand gehalten ist. Seitliche weist die Säulenblende eine Aufnahmestruktur 19 für ein Führungsprofil einer Versenkscheibe auf. Das Aufnahmeelement 8 ist vorliegend ausschließlich im oberseitigen Endbereich wenige Zentimeter unterhalb der Oberkante der Säulenblende 1 angeordnet. Alternativ kann die Säulenblende 1 mehrere Aufnahmeelemente 8 mit Bohrung 7 aufweisen. Bevorzugt ist aber nur ein Aufnahmeelement 8 mit Bohrung 7 zum Verbinden mit der Befestigungseinrichtung 5 vorgesehen.

Das in Figur 11 gezeigte blendenseitige Eingriffsteil 3 ermöglicht eine 4-Wege Fixierung der Fensterführungsdichtung 6 relativ zur Säulenblende 1 und lässt nach dem Verbinden der Säulenblende 1 mit der Befestigungseinrichtung 5 eine Nachjustierung der Position der Fensterführungsdichtung 6 relativ zur Säulenblende 1 weder in x-Richtung noch eine Nachjustierung in z-Richtung zu. Das in Figur 12 alternativ gezeigte Aufnahmeelement 8 weist eine als Langloch ausgebildete Bohrung 7 auf. Diese ermöglicht eine 2-Wege Fixierung der Dichtung und lässt eine Nachjustierung von Fensterführungsdichtung 6 relativ zur Säulenblende 1 in x-Richtung im Millimeterbereich (1 mm bis 3 mm) zu. Aus den Figur 11 und Figur 12 ist ferner ersichtlich, dass die Aufnahmestruktur 19 für die Fensterführungsdichtung 6 im Bereich des Aufnahmeelements 8 unterbrochen ist.

### Bezugszeichenliste

- 1: Säulenblende
- 2: Türstruktur
- 3: Einlegeteil
- 4: Aussparung an dem Einlegeteil
- 5: Befestigungseinrichtung
- 5a: Rastabschnitt
- 5b: Befestigungsabschnitt
- 6: Formmasse
- 7: ringförmiges Aufnahmeelement
- 8: Verbindungssteg
- 9: Montageöffnung an der Türstruktur
- 10a: erstes Befestigungselement
- 10b: zweites Befestigungselement
- 11 a: erster Ringscheibenabschnitt
- 11 b: zweiter Ringscheibenabschnitt
- 12a: erste Stirnfläche
- 12b: zweite Stirnfläche
- 13a: erste Aussparung
- 13b: zweite Aussparung
- 14: Vorsprung
- 15: Rastvorsprung
- 16a: erster Flügel
- 16b: zweiter Flügel
- 17: Aussparung
- 18: Rastnut
- 19: Aufnahmestruktur
- 20: Dichtungsprofil
- 21: Eingriffselement

## Patentansprüche

1. Dichtungsanordnung zur Vorfixierung und Vorausrichtung einer Säulenblende (1) an einer Türstruktur (2) eines Kraftfahrzeugs vor der Endbefestigung, mit einem Einlegeteil (3), das bei bestimmungsgemäßer Endmontage mit Dichtungsprofilen (20) der Dichtungsanordnung verbunden ist, **dadurch gekennzeichnet, dass**
- ein erster Rastabschnitt (5a) und ein zweiter Rastabschnitt (5b) vorgesehen sind, die an einem Befestigungselement (10a, 10b) ausgebildet sind, wobei das Befestigungselement (10a, 10b) entweder einstückig an dem Einlegeteil (3) ausgebildet oder an separat zum Einlegeteil (3) ausgebildet ist, und dass
- der erste Rastabschnitt (5a) derart ausgebildet ist, dass der erste Rastabschnitt (5a) eine erste Eingriffspaarung mit der Säulenblende (1) ausbildet, wobei mittels der ersten Eingriffspaarung die Vorfixierung und Vorausrichtung der Säulenblende (1) gegenüber dem Einlegeteil (3) zu gewährleistet ist, und der zweite Rastabschnitt (5b) derart ausgebildet ist, dass der zweite Rastabschnitt (5b) zur Bildung einer zweiten Eingriffspaarung mit der Türstruktur (2) ausbildet, wobei mittels der zweiten Eingriffspaarung eine Ausrichtung des Einlegeteils (3) relativ zur Türstruktur (2) gewährleistet ist,
so dass vor der bestimmungsgemäßer Endmontage der Säulenblende (1), die Säulenblende (1), die Dichtungsanordnung und die Türstruktur (2) unter Zwischenschaltung des Einlegeteils (3) aneinander vorfixierbar und zueinander vorausgerichtbar sind.

2. Dichtungsanordnung nach Anspruch 1, **dadurch gekennzeichnet, dass** wenigstens der zweite Rastabschnitt (5b) an einem bei bestimmungsgemäßer Endmontage der Säulenblende (1) in einen Hohlraum der Türstruktur (2) eindringenden zweiten Befestigungselement (10b) ausgebildet ist.

3. Dichtungsanordnung nach Anspruch 1 oder 2, **dadurch gekennzeichnet, dass** der erste Rastabschnitt (5a) und der zweite Rastabschnitt (5b) zumindest bei sich in bestimmungsgemäßer Endmontage befindlicher Säulenblende (1) im wesentlichen achsparallel, bevorzugt koaxial, zueinander ausgerichtet sind.

4. Dichtungsanordnung nach einem der vorhergehenden Ansprüche, **dadurch gekennzeichnet, dass** sowohl die vom ersten Rastabschnitt (5a) als auch die vom zweiten Rastabschnitt (5b) bereitgestellte Rastwirkrichtung im Wesentlichen parallel zur y-Richtung ausgerichtet ist.

5. Dichtungsanordnung nach einem der vorhergehenden Ansprüche, **dadurch gekennzeichnet, dass** das Einlegeteil (3) mit zumindest einer Aufnahme (4) zur Befestigung des, den ersten Rastabschnitt (5a) aufweisenden ersten Befestigungselements (10a) und/oder zur Befestigung des, den zweiten Rastabschnitt (5b) aufweisenden zweiten Befestigungselements (10b) versehen ist, wobei zumindest eines der Befestigungselemente (10a oder 10b) das Einlegeteil (3) bei bestimmungsgemäßer Montage wenigstens teileweise durchdringt.

6. Dichtungsanordnung nach einem der vorhergehenden Ansprüche, **dadurch gekennzeichnet, dass** der erste Rastabschnitt (5a) und/oder der zweite Rastabschnitt (5b) quer zur Aufsteckrichtung nachgiebig ausgebildet sind, insbesondere außenseitig eine radial nachgiebige Struktur aufweisen.

7. Dichtungsanordnung nach einem der vorhergehenden Ansprüche, **dadurch gekennzeichnet, dass** das Aufnahmeelement (7) an der Säulenblende (1) von einem gegenüber der Rückseite der Säulenblende (1) beabstandeten, kreisrunden, ovalen oder langlochartigen Aufnahmering gebildet ist.

8. Dichtungsanordnung nach einem der vorhergehenden Ansprüche, **dadurch gekennzeichnet, dass** das erste Befestigungselement (10a) und/oder das zweite Befestigungselement (10b) integraler Bestandteil des Einlegeteils (3) ist.

9. Dichtungsanordnung nach einem der vorhergehenden Anspüche, **dadurch gekennzeichnet, dass** der zweite Rastabschnitt (5b) wenigstens einen, ein Karosserieblech der Türstruktur (2) hintergreifenden radialen Rastvorsprung (15) oder Flügel (16a, 16b) zur Fixierung des Einlegeteils (5) an der Türstruktur (2) aufweist.

10. Dichtungsanordnung nach einem der vorhergehenden Ansprüche, **dadurch gekennzeichnet, dass** das erste Befestigungselement (10a) und das zweite Befestigungselement (10b) achsparallel, insbesondere koaxial, ausgerichtet sind und zumindest teilweise ineinander eindringen und unter Anordnung des Einlegeteils (3) zwischen beiden Befestigungselementen (10a, 10b) miteinander verrasten.

11. Dichtungsanordnung nach einem der vorhergehenden Ansprüche, **dadurch gekennzeichnet, dass** zumindest das zweite Befestigungselement (10b) drehbar relativ zum Einlegeteil (3) ist, so dass es von einer Montageausrichtung in eine Verriegelungsausrichtung überführbar ist.

12. Dichtungsanordnung nach dem vorhergehenden Anspruch, **dadurch gekennzeichnet, dass** zumindest an dem zweiten Befestigungselement (10b) eine Verdrehsicherung vorgesehen ist, um ein ungewolltes Verdrehen zumindest des zweiten Befestigungselements (10b) gegenüber dem Einlegeteil (3) zu erschweren.

13. Dichtungsanordnung nach einem der vorhergehenden Ansprüche, **dadurch gekennzeichnet, dass** der erste Rastabschnitt (5a) innenseitig und der zweite Rastabschnitt (5b) außenseitig einer Befestigungshülse angeordnet sind.

14. Montagesystem mit der Dichtungsanordnung und einer Säulenblende (1) zur Ausrichtung der Dichtungsanordnung und der Säulenblende (1) an einer Türstruktur (2), **dadurch gekennzeichnet, dass** die Dichtungsanordnung eine Dichtungsanordnung nach einem der vorhergehenden Ansprüche ist und die Säulenblende (1) ein Aufnahmeelement (9) oder ein Eingriffselement (21) zur Herstellung der ersten Eingriffspaarung mit dem Einlegeteil (3) aufweist.
